# FASCICULE DE BREVET EUROPEEN

(11) **EP 2 595 417 B1**
(45) Date de publication et mention de la délivrance du brevet: **28.01.2015**
(21) Numéro de dépôt: 12192189.4
(22) Date de dépôt: 12.11.2012
(51) Int. Cl.: H04W 4/00, G06Q 20/32, G06Q 20/38, G07F 7/00, H04M 1/725

(54) **Procede de selection d'une application dans un terminal, et terminal mettant en oeuvre ce procede.**
Auswahlverfahren einer Anwendung in einem Endgerät, und Endgerät zur Umsetzung dieses Verfahrens
Method for selecting an application in a terminal and terminal implementing said method

(30) Priorité: 17.11.2011 FR 1160472
(43) Date de publication de la demande: 22.05.2013
(73) Titulaire: Oberthur Technologies, 92300 Levallois-Perret (FR)
(72) Inventeur: Ledru, Philippe, 92000 NANTERRE (FR); Danree, Arnaud, 92000 NANTERRE (FR)
(74) Mandataire: Delumeau, François Guy

(56) Documents cités:
- WO-A1-2006/095212
- WO-A2-2011/127084
- FR-A1- 2 945 141

## Description

### Arrière-plan de l'invention

La présente invention se situe dans le domaine des terminaux aptes à héberger une pluralité d'applications exécutables.

D'une façon générale, une application exécutable est un programme d'ordinateur apte à remplir une ou plusieurs fonctions lorsqu'il est exécuté par un processeur ou par un microcontrôleur du terminal.

L'invention vise plus particulièrement à permettre la sélection d'une application parmi une pluralité d'applications en fonction d'un contexte de localisation du terminal.

Elle s'applique en particulier, mais de façon non limitative, pour sélectionner une application apte à réaliser une transaction avec un équipement externe au terminal.

A titre d'exemple, pour illustrer une application de l'invention, on connait aujourd'hui des téléphones mobiles qui comportent des moyens de communication radiofréquence à courte portée, par exemple conformes au standard NFC (Near Field Communication) ayant une portée de quelques centimètres, permettant au terminal de communiquer avec un lecteur externe, et une mémoire sécurisée hébergeant une ou plusieurs applications de paiement, les informations de paiement nécessaires à une transaction étant communiquées au lecteur par les moyens de communication précités. Les moyens de communications radiofréquence NFC comprennent une antenne et un microcircuit dédié pour assurer la sécurité des informations transmises par cette interface. L'antenne et le microcircuit peuvent être intégrés au téléphone mobile ou être compris dans un module amovible, tel qu'une carte SIM, un sticker fixé sur le terminal mobile, ou une carte MMC (MultiMedia card) par exemple.

Pour rappel, une transaction bancaire consiste entre un échange de données sécurisé entre un terminal de paiement et une application bancaire stockée dans une mémoire sécurisée selon un protocole défini (e.g le protocole EMV définit par Europay Mastercard Visa Corporation) initié par un premier échange entre une application d'administration des applications, en charge de gérer l'ordre et la priorité des applications de paiement chargées dans la mémoire (e.g l'application PPSE du standard EMV), et le terminal de paiement.

Lorsque le téléphone mobile comporte plusieurs applications de paiement, le problème de la sélection automatique de l'application en fonction du contexte de localisation se pose dès lors que l'on souhaite éviter que l'utilisateur ne sélectionne l'application de paiement de façon manuelle.

On connait de l'état de la technique le document US 2009/037326 qui décrit un téléphone mobile apte à sélectionner une application bancaire en fonction d'informations de localisation fournies au téléphone par un dispositif externe, par exemple, par un terminal de paiement ou par des moyens de localisation de type GPS.

Cette méthode présente notamment un inconvénient majeur en ce qu'il est nécessaire que le terminal comprenne un dispositif de positionnement par satellite et que ce dispositif soit opérationnel lors de chaque transaction. Ceci peut être problématique en cas de non réception du signal satellite, ce qui est couramment le cas en ville ou à l'intérieur d'un bâtiment tel qu'un centre commercial.

De plus, lorsque l'information de localisation est fournie par le terminal de paiement, la durée de la transaction entre l'application de paiement et le terminal de paiement va être rallongée. Ce temps supplémentaire risque de perturber l'utilisateur de l'application. De plus, l'information de localisation est dépendante du terminal de paiement qui peut ou non être compatible avec cette technique.

L'état de l'art le plus proche est constitué des documents WO 2006/095212 et WO 2011/127084.

L'invention propose un procédé de sélection d'une application dans un terminal qui ne présente pas les inconvénients de l'art antérieur.

### Objet et résumé de l'invention

L'invention concerne un procédé pouvant être mis en oeuvre par un terminal pour sélectionner une application exécutable au moins en partie par un module sécurisé incorporé au terminal, parmi une pluralité d'applications.

Ce procédé comporte :
- une étape d'obtention d'une information de localisation du terminal à partir d'une mémoire de ce module sécurisé; et
- une étape de sélection d'une application à partir de cette information de localisation.

Corrélativement l'invention vise un terminal comportant :
- un module d'obtention d'une information de localisation du terminal, à partir d'une mémoire d'un module sécurisé incorporé dans ce terminal ; et
- un module de sélection d'une application exécutable au moins en partie par ce module sécurisé, la sélection se faisant à partir de cette information de localisation.

Ainsi, et contrairement à l'art antérieur, l'information de localisation utilisée pour sélectionner l'application est obtenue à partir d'un module sécurisé incorporé dans le terminal.

L'invention rend la solution autonome et indépendante de l'infrastructure du terminal de paiement ou de tout dispositif externe. Le système est mis à jour et prêt à être utilisé avant que la transaction bancaire ne soit initiée. De plus, le mécanisme de sélection est intégré au module sécurisé et est compatible avec tout type de terminal mobile. Ainsi, l'invention présente l'avantage de pouvoir être mise en oeuvre sur les terminaux de façon très simple.

Dans un mode préféré de réalisation de l'invention, l'information de localisation est acquise par un module du terminal externe au module sécurisé (appelé ci-après « module d'acquisition ») et mémorisée dans le module sécurisé.

Dans un mode de réalisation, le terminal est un téléphone cellulaire et l'information de localisation est acquise par le terminal, lors d'une étape de recherche d'un réseau de télécommunication dont la zone de couverture couvre le terminal.

En particulier, l'information de localisation peut être acquise au démarrage du terminal, ou en situation de nomadisme lors du passage d'une première zone de couverture couverte par un premier réseau de télécommunications à une deuxième zone de couverture couverte par un deuxième réseau de télécommunications.

Une telle situation de nomadisme avec changement de zone géographique est connue de l'homme du métier sous le nom anglais de « roaming ».

En particulier, dans le cas d'un terminal conforme à la norme LTE, norme de téléphonie cellulaire de quatrième génération, l'invention propose d'exploiter des informations de localisation du terminal obtenues par les mécanismes connus de sélection de réseaux de télécommunication mis en oeuvre lors d'une phase de recherche de couverture par un téléphone mobile.

En particulier, les spécifications ETSI TS 131 102 V10.1.0 (2011-04) de la norme LTE définissent un fichier d'informations locales EF_{LOCI} contenant le code pays d'un réseau de télécommunications dont la zone de couverture couvre le terminal.

Ce fichier EF_{LOCI} est mémorisé dans la carte SIM du téléphone (module sécurisé au sens de l'invention).

De façon connue, et comme décrit dans la spécification 3GPP TS 31.102 version 10.1.0 Release 10 ce fichier comporte un champ TMSI et un champ LAI.

Le champ TMSI est pertinent pour un opérateur donné ; il peut contenir un octet « code pays » pour déterminer une zone géographique.

Le code LAI (Location Area Identification), défini par le document 3GPP TS 23.003 Realese 9 22 V9.3.0 (2010-06) comporte deux codes de localisation à savoir :
- un code MCC (Mobile Country Code) qui identifie le pays dans lequel se situe le réseau ; et
- un code LAC (Location Area Code) qui identifie une zone géographique au sein du réseau.

Ainsi, dans ce mode particulier de réalisation de l'invention, l'information de localisation, déterminée lors d'une phase de recherche d'un réseau de télécommunication, soit au démarrage du terminal soit en situation de nomadisme, est mémorisée dans le fichier EF_{LOCI} de la carte SIM et utilisé pour sélectionner une application exécutable par le terminal.

Dans un mode de réalisation, le terminal interroge la mémoire (par exemple le fichier EF_{LOCI} de la carte SIM), de sa propre initiative, par exemple régulièrement.

Dans un mode particulier de réalisation, le terminal selon l'invention est un terminal de communication cellulaire comportant un module de communication sur un réseau de télécommunication cellulaire. Dans ce terminal :
- le module sécurisé au sens de l'invention est un module d'authentification du terminal sur ledit réseau ;
- le module de communication comporte des moyens pour acquérir l'information de localisation et pour la mémoriser dans le module sécurisé ; et
- le module de sélection au sens de l'invention est une application PPSE conforme à la norme EMV citée an préambule de ce document.

Dans un autre mode de réalisation, l'information de localisation est obtenue par lecture d'un champ qui identifie l'opérateur du réseau de télécommunications dans la couverture duquel se trouve le terminal.

Dans un autre mode de réalisation, l'information de localisation est obtenue par lecture d'un champ correspondant à un code du pays dans lequel se trouve le terminal.

Dans un mode préféré de réalisation de l'invention, l'étape d'obtention d'information de localisation est mise en oeuvre sur réception d'un message de signalement émis par le module sécurisé, ce message étant représentatif d'une mise à jour de la mémoire.

Ainsi, dans ce mode de réalisation, dès que la mémoire du module sécurisé comporte une information de localisation mise à jour, un message de signalement est émis vers le processeur du terminal pour que celui-ci puisse sélectionner l'application automatiquement en fonction de la nouvelle localisation.

Comme message de signalement, on peut par exemple utiliser la commande STK Refresh.

Dans un mode particulier de l'invention, l'application sélectionnée est une application modulaire dont :
- au moins un module est exécutable par un micro-contrôleur du module sécurisé ; et
- au moins un module est exécutable par un micro-contrôleur du terminal externe au module sécurisé.

Dans un mode particulier de réalisation, les différentes étapes du procédé de sélection sont déterminées par des instructions de programmes d'ordinateurs.

En conséquence, l'invention vise aussi un programme d'ordinateur sur un support d'informations, ce programme étant susceptible d'être mis en oeuvre par un ordinateur, ce programme comportant des instructions adaptées à la mise en oeuvre des étapes du procédé de sélection tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise aussi un module sécurisé comportant un microcircuit et un support tel que mentionné ci-dessus.

### Brève description des dessins

D'autres caractéristiques et avantages de la présente invention ressortiront de la description faite ci-dessous en référence aux dessins qui en illustrent un exemple de réalisation dépourvu de tout caractère limitatif.

Sur les figures :
- la figure 1 représente, sous forme d'organigramme, les principales étapes d'un procédé de sélection conforme à un mode particulier de réalisation de l'invention ; et
- les figures 2A et 2B représentent, de façon schématique, un terminal conforme à deux modes particuliers de réalisation de l'invention.

### Description détaillée de l'invention

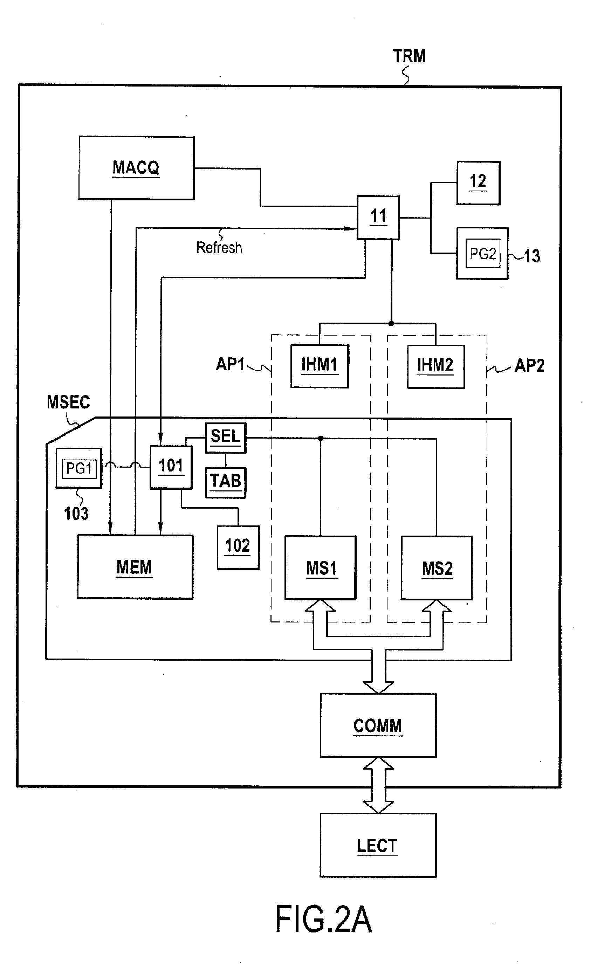

Dans l'exemple de réalisation de la **figure 2A****,** le terminal TRM conforme à l'invention est un téléphone cellulaire conforme à la norme LTE, correspondant à la quatrième génération de norme. Au cours des dernières années, les principaux opérateurs ont progressivement migré de la norme GSM/CDMA (2G) vers l'UMTS/EvDo (3G), puis plus récemment, vers la norme LTE (pour « *Long Term Evolution* »). A terme, la technologie LTE deviendra une norme dite de 4^{ème} génération (dans sa version 10 appelée *LTE Advanced*). L'homme du métier comprendra qu'un téléphone cellulaire compatible avec l'une quelconque des générations de téléphonie cellulaire peut être utilisé pour la mise en oeuvre de l'invention.

Le téléphone cellulaire comporte notamment un module sécurisé MSEC constituée par une carte SIM. Il comporte en outre un processeur 11, une mémoire vive de type RAM 12 et une mémoire morte de type ROM 13 externes au module sécurisé MSEC.

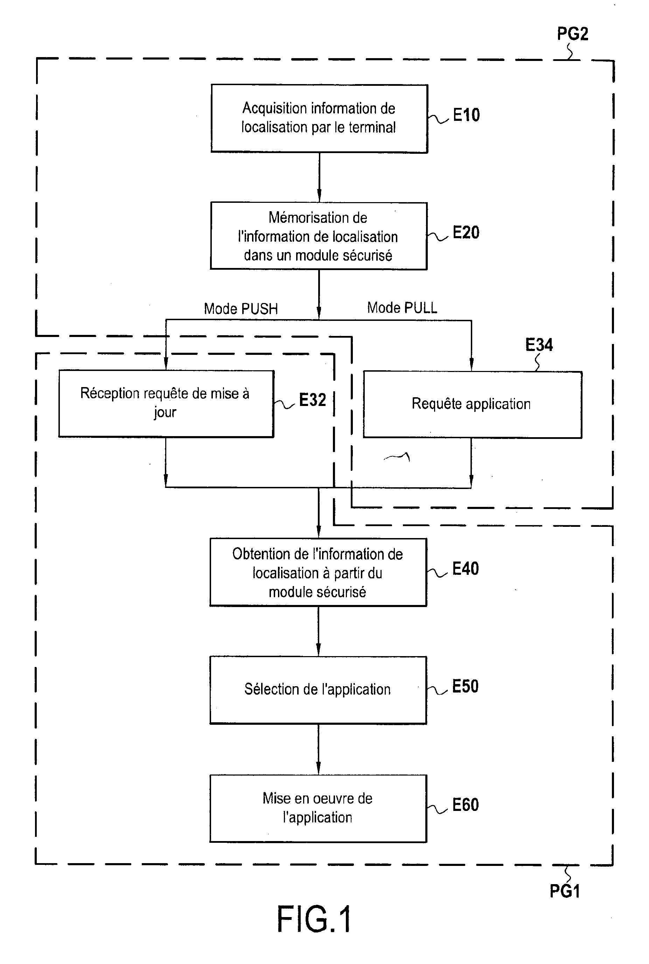

La mémoire morte 13 contient un programme d'ordinateur PG2 dont les instructions permettent la mise en oeuvre des étapes E10, E20 et E34 du procédé de sélection représenté à la figure 1.

Le module sécurisé MSEC est conforme à l'invention. Il comporte notamment un microcircuit 101, une mémoire vive de type RAM 102, et une mémoire morte de type ROM 103.

La mémoire morte 103 constitue un support au sens de l'invention. Elle contient un programme d'ordinateur PG1 dont les instructions permettent la mise en oeuvre des étapes E32 et E40 à E60 du procédé de sélection représenté à la figure 1.

Dans l'exemple décrit ici, le terminal TRM comporte deux applications AP1 et AP2 de paiement.

Chacune de ces applications est une application modulaire et comporte une interface homme machine (IHM1, IHM2) constituée par un module informatique exécutable par le processeur 11 et un module (MS1, MS2) incorporé dans le module sécurisé MSEC et exécutable par le microcircuit 101 du module sécurisé, en coopération avec la mémoire vive 102 de ce module.

De façon remarquable, le terminal TRM comporte, à l'intérieur du module de sécurité MSEC, un module SEL de sélection d'une application AP1, AP2 à partir d'une information de localisation obtenue d'une mémoire MEM intégrée au module sécurisé MSEC.

Cette mémoire MEM peut être non volatile.

Dans le mode de réalisation décrit ici, le module SEL met en oeuvre les fonctionnalités d'une application PPSE conforme au standard EMV.

En particulier, ce module SEL est en charge de gérer l'ordre et la priorité des applications de paiement chargées dans la mémoire. Ainsi, il sélectionne l'application de paiement à utiliser en priorité lors d'une transaction de paiement.

De plus, ce module SEL est automatiquement mis à jour lors de l'ajout d'une application type AP1 ou AP2 par une méthode d'auto-enregistrement. Chaque application fournit au module SEL une information lui permettant d'ordonnancer ces mêmes applications et de présenter une liste au terminal TRM.

De façon remarquable également, le terminal TRM comporte aussi un module d'acquisition MACQ, externe au module sécurisé MSEC, apte à acquérir l'information de localisation et à la mémoriser dans la mémoire MEM du module sécurisé MSEC.

Dans le mode de réalisation décrit ici, le terminal TRM est un téléphone cellulaire. Il comporte de façon connue un module de communication apte à communiquer sur le réseau cellulaire et un module d'authentification du terminal, constitué par exemple par une carte SIM ou USIM.

Dans le mode de réalisation décrit ici, le module de communication sur le réseau cellulaire implémente le module d'acquisition de données de localisation au sens de l'invention. Ils sont donc confondus sur la figure 2A et référencés MACQ.

De même, dans le mode de réalisation décrit ici, le module d'authentification (par exemple une carte SIM) implémente le module sécurisé au sens de l'invention. Ils sont donc confondus sur la figure 2A et référencés MSEC.

Dans ce mode de réalisation particulier, le terminal TRM comporte des moyens de communication COMM avec un lecteur externe LECT. Ce module de communication peut être conforme au standard NFC.

Dans le mode de réalisation de la figure 2A, le module sécurisé MSEC est apte à générer une commande STK Refresh pour informer le processeur 11 de toute mise à jour de la mémoire MEM. Sur réception d'une telle commande, le processeur 11 envoie une commande au processeur 101 du module sécurisé pour l'informer de la mise à jour.

De façon connue, lors du démarrage du terminal TRM, ou lors d'un changement de pays, c'est-à-dire en situation de nomadisme (roaming), le terminal TRM effectue une recherche d'un réseau de télécommunication dont la couverture couvre le terminal (étape E10).

Lorsqu'un tel réseau est identifié, le terminal TRM effectue une demande d'enregistrement auprès de ce réseau et si cette demande est acceptée le code identifiant ce réseau est mémorisé dans le fichier EF_{LOCI} (étape E20).

Ces étapes E10 et E20 connues en soi, constituent des étapes d'acquisition d'information de localisation par le terminal et de mémorisation d'information de localisation dans un module sécurisé au sens d'un mode particulier de réalisation de l'invention.

Conformément à l'invention, la sélection de l'application dans le module sécurisé est effectuée à partir de l'information de localisation mémorisée dans le module sécurisé. Dans le mode de réalisation décrit ici, le module sécurisé MSEC détecte la mise à jour de la mémoire pour sélectionner l'application exécutée par le microcircuit sécurisé en fonction de cette mise à jour, lorsqu'il reçoit une commande du processeur 11, suite au REFRESH.

De plus, l'invention propose deux variantes principales pour sélectionner une application sur le terminal.

Dans une première variante représentée à la figure 2A (mode PUSH), le module sécurisé envoie, au cours d'une étape E32, un message de signalement au processeur 11 du terminal (par exemple une commande STK Refresh) lorsque la mémoire MEM est mise à jour ; sur réception de ce message le processeur 11 envoie une commande au processeur 101 du module sécurisé MSEC qui active le module SEL de sélection pour qu'il lise la mémoire du module sécurisé pour obtenir l'information de localisation au cours d'une étape E40.

Dans une deuxième variante non représentée (mode PULL), l'étape E40 d'obtention est effectuée à l'initiative du terminal, par exemple sur réception d'une requête émise, au cours d'une étape E34, par une application de gestion des applications bancaires du terminal, celle-ci interrogeant régulièrement le processeur 101 pour connaître l'application sélectionnée et activer directement l'application choisie au niveau du terminal via le module IHM1, IHM2.

Quoiqu'il en soit, conformément à l'invention, le module sécurisé et/ou le terminal sélectionne, au cours d'une étape E50, l'application AP1 ou l'application AP2 en fonction de l'information de localisation lue dans la mémoire sécurisée MEM à l'étape E40.

La sélection peut être réalisée au moyen d'une table de correspondance TAB entre un code pays et des identifiants des applications AP1 et AP2. La sélection peut également être réalisée au moyen d'une table de correspondance entre un identifiant d'opérateur du réseau de télécommunication cellulaire, par exemple l'opérateur du réseau utilisé par le terminal cellulaire, et des identifiants des applications AP1 et AP2.

Cette application peut par exemple être mise en oeuvre au cours d'une étape E60.

Elle peut aussi rester en sommeil, mais être placée prioritaire.

Par exemple, si les applications AP1 et AP2 sont deux applications de paiement, l'application sélectionnée à l'étape E50 peut être activée et maintenue active jusqu'à extinction du terminal ou jusqu'à la prochaine mise à jour du fichier de localisation EF_{LOCI}.

Dans le mode de réalisation décrit ici, l'information de localisation est le code MMC (Mobile Country Code du champ LAI (Location Area Identification)) du fichier EF_{LOCI}. D'autres codes peuvent être utilisés, par exemple un code identifiant l'opérateur du réseau de télécommunications dans la couverture duquel se trouve le terminal.

Dans un autre mode de réalisation, l'information de localisation peut être plus fine ou plus précise que le code LAC. Elle peut notamment être constituée par l'identifiant de cellule cell-id obtenu par la carte SIM en interrogeant le terminal avec la commande proactive « provide local information ».

Dans le mode de réalisation décrit précédemment, le module sécurisé est une carte SIM.

Dans d'autres modes de réalisation, le module sécurisé peut être constitué par une carte au format micro SD MicroSD (Macro Security Digital Card) ou par un micro-contrôleur sécurisé spécifique par exemple.

Dans le cadre de cette invention il est nécessaire de préciser les notions suivantes. On entend par module sécurisé un ou des composants microélectroniques mettant en oeuvre des fonctions pouvant être protégées par les mécanismes de protection suivant :
- Déblocage d'une fonction par authentification au moyen d'une vérification d'un code personnel, c'est-à-dire que la fonction est exécutée si l'utilisateur saisit un code personnel.
- Protection des données dans les mémoires du microcircuit par des algorithmes de cryptographie respectant la norme FIPS par exemple.
- Protection matérielle du microcircuit hébergeant les applications et les données. Ces dernières peuvent être protégées matériellement contre des attaques dites non invasives (attaques par analyses de temps, analyse de consommation, analyse électromagnétique), des attaques dites invasives (attaque d'horloge par exemple) ou semi-invasives.

En particulier, le module sécurisé dans le cas d'une carte SIM est un module d'authentification d'un abonné à un réseau cellulaire conforme à l'une quelconque des normes de réseau cellulaire (2G, 3G, 4G etc..). L'homme du métier saura choisir les spécifications matérielles adaptées à ses besoins, notamment en termes de couvertures et bande passante.

Grâce au module d'authentification l'abonné est authentifié au réseau de communication par un mécanisme d'authentification à base de clés secrètes et d'algorithmes cryptographiques permettant de vérifier l'identité de l'abonné. De préférence, les fonctions d'authentification sur le module sécurisé sont également protégées par une vérification par code personnel, usuellement appelé code PIN. Bien entendu, l'homme du métier saura mettre en oeuvre d'autres mécanismes de cryptographie pour assurer par exemple la confidentialité et l'intégrité des données transmises sur la liaison sécurisée.

Dans l'exemple précédent, les applications AP1 et AP2 sont des applications permettant d'effectuer des transactions bancaires.

Il peut s'agir d'application de tout autre type, par exemple des jeux, applications de transport ou application d'identité, et il n'est pas essentiel pour l'invention que ces applications soient des applications aptes à communiquer avec un équipement externe au terminal. Plus généralement, il s'agit d'un programme mis en oeuvre par un microcontrôleur et constitué d'un fichier de lignes de codes qui permettent d'exécuter un ensemble de fonctions, par exemple paiement NFC, interface IHM avec utilisateur, communication de données avec environnement extérieur au terminal.

Il peut aussi s'agir d'applications de transport dans le cadre de la technologie MIFARE.

Lorsqu'il s'agit d'applications communicantes, d'autres standards que le standard NFC peuvent être utilisés.

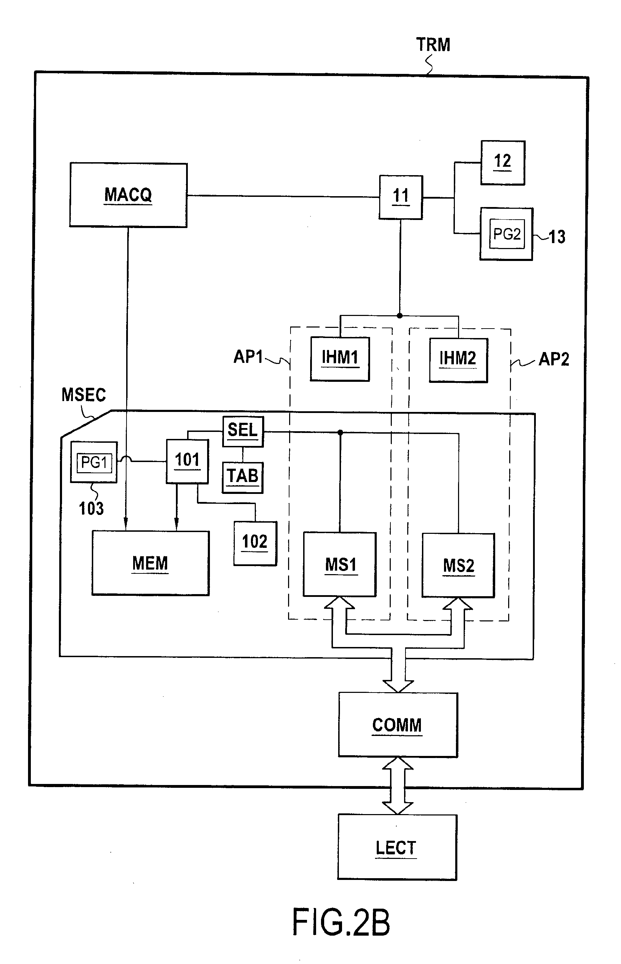

A la figure 2B, on a représenté un autre mode de réalisation de l'invention, dans lequel le processeur 101 du module sécurisé informe directement le module de sélection MSEL de toute mise à jour de l'information de localisation, sans passer par l'intermédiaire du processeur 11.

## Revendications

1. Procédé pouvant être mis en oeuvre par un terminal (TRM) pour sélectionner une application (AP1, AP2) exécutable au moins en partie par un module sécurisé incorporé au terminal, ce procédé étant tel qu'il comporte :
- une étape (E40) d'obtention d'une information de localisation du terminal, à partir d'une mémoire (MEM) dudit module sécurisé (MSEC); et
- une étape (E50) de sélection d'une application à partir de cette information de localisation.

2. Procédé de sélection selon la revendication 1, **caractérisé en ce qu'il** comporte une étape (E10) d'acquisition de ladite information de localisation par un module d'acquisition (MACQ) du terminal, externe audit module sécurisé et une étape (E20) de mémorisation de ladite information dans ledit module sécurisé.

3. Procédé de sélection selon la revendication 2, **caractérisé en ce que** ledit terminal (TRM) est un téléphone cellulaire et **en ce que** ladite information de localisation est acquise (E10) par ledit module d'acquisition (MACQ) lors d'une étape de recherche d'un réseau de télécommunications dont la zone de couverture couvre ledit terminal.

4. Procédé de sélection selon la revendication 3, **caractérisé en ce que** ladite information de localisation est acquise (E10) au démarrage du terminal, ou en situation de nomadisme lors du passage d'une première zone de couverture couverte par un premier réseau de télécommunications à une deuxième zone de couverture couverte par un deuxième réseau de télécommunications.

5. Procédé de sélection selon la revendication 3 ou 4, **caractérisé en ce que** ladite information est obtenue (E40) par lecture d'un champ TMSI ou LAI d'un fichier de localisation EF_{LOCI} conforme à la norme de téléphonie cellulaire de quatrième génération, par exemple la norme LTE.

6. Procédé de sélection selon l'une quelconque des revendications 1 à 4, **caractérisé en ce que** la dite information est obtenue (E40) par lecture d'un champ correspondant à un code du pays dans lequel se trouve ledit terminal.

7. Procédé de sélection selon l'une quelconque des revendications 1 à 5, **caractérisé en ce que** la dite information est obtenue (E40) par lecture d'un champ qui identifie l'opérateur du réseau de télécommunications dans la couverture duquel se trouve ledit terminal.

8. Procédé de sélection selon l'une quelconque des revendications 2 à 7 **caractérisé en ce que** ladite étape (E40) d'obtention d'information de localisation est mise en oeuvre sur réception (E32) d'un message (REFR) de signalement, émis par ledit module sécurisé, représentatif d'une mise à jour de ladite mémoire (MEM).

9. Procédé de sélection selon la revendication 8, **caractérisé en ce que** ledit message de signalement est la commande STK REFRESH.

10. Procédé de sélection selon l'une quelconque des revendications 1 à 9, **caractérisé en ce que** ladite application (AP1) est une application modulaire dont :
- au moins un module (MS1) est exécutable par un microcontrôleur (101) dudit module sécurisé ; et
- au moins un module (IHM1) est exécutable par un microcontrôleur (11) dudit terminal, externe audit module sécurisé.

11. Terminal (TRM) comportant :
- un module (MSEL) d'obtention d'une information de localisation du terminal, à partir d'une mémoire (MEM) d'un module sécurisé (MSEC) incorporé dans le terminal ; et
- un module (MSEL) de sélection d'une application (AP1, AP2) exécutable au moins en partie par ledit module sécurisé, la sélection se faisant à partir de cette information de localisation.

12. Terminal (TRM) selon la revendication 11, le terminal étant un terminal de communication cellulaire comportant un module de communication sur un réseau de télécommunication cellulaire, ce terminal étant **caractérisé en ce que** :
- ledit module sécurisé (MSEC) est un module d'authentification du terminal sur ledit réseau ;
- ledit module de communication (MACQ) comporte des moyens pour acquérir ladite information de localisation et pour mémoriser ladite information dans ledit module sécurisé ; et **en ce que**
- ledit module (MSEL) de sélection est une application PPSE conforme à la norme EMV.

13. Programme d'ordinateur (PG1) comportant des instructions pour la mise en oeuvre du procédé de sélection selon l'une quelconque des revendications 1 ou 5 à 9 lorsque ce programme est exécuté par un processeur (101).

14. Support d'enregistrement (103) lisible par un ordinateur sur lequel est enregistré un programme d'ordinateur (PG1) comprenant des instructions pour l'exécution des étapes du procédé de sélection selon l'une quelconque des revendications 1 ou à 5 à 9.

15. Module sécurisé (MSEC) comportant un microcircuit et un support selon la revendication 14.

## Patentansprüche

1. Verfahren, das durch ein Endgerät (TRM) durchgeführt werden kann, um eine Anwendung (AP1, AP2), die wenigstens teilweise durch ein in das Endgerät integriertes gesichertes Modul ausführbar ist, auszuwählen, wobei dieses Verfahren derart ist, dass es umfasst:
- einen Schritt (E40) zum Erhalten einer Lokalisierungsinformation des Endgerätes mittels eines Speichers (MEM) des gesicherten Moduls (MSEC), und
- einen Schritt (E50) zur Auswahl einer Anwendung anhand dieser Lokalisierungsinformation.

2. Auswahlverfahren nach Anspruch 1, **dadurch gekennzeichnet, dass** es einen Schritt (E10) zur Erfassung der Lokalisierungsinformation durch ein außerhalb des gesicherten Moduls befindliches Erfassungsmodul (MACQ) des Endgerätes sowie einen Schritt (E20) zur Speicherung der Information in dem gesicherten Modul umfasst.

3. Auswahlverfahren nach Anspruch 2, **dadurch gekennzeichnet, dass** das Endgerät (TRM) ein Mobiltelefon ist und dass die Lokalisierungsinformation durch das Erfassungsmodul (MACQ) während eines Schrittes zum Suchen eines Telekommunikationsnetzes, dessen Versorgungsgebiet das Endgerät abdeckt, erfasst wird (E10).

4. Auswahlverfahren nach Anspruch 3, **dadurch gekennzeichnet, dass** die Lokalisierungsinformation beim Einschalten des Endgerätes oder in einer Nomadismus-Situation beim Übergang von einem durch ein erstes Telekommunikationsnetz abgedeckten ersten Versorgungsgebiet zu einem durch ein zweites Telekommunikationsnetz abgedeckten zweiten Versorgungsgebiet erfasst wird (E10).

5. Auswahlverfahren nach Anspruch 3 oder 4, **dadurch gekennzeichnet, dass** die Information durch Lesen eines TMSI- oder LAl-Feldes einer Lokalisierungsdatei EF_{LOCI} gemäß der Mobilfunknorm der vierten Generation, beispielsweise der LTE-Norm erhalten wird (E40).

6. Auswahlverfahren nach einem der Ansprüche 1 bis 4, **dadurch gekennzeichnet, dass** die Information durch Lesen eines Feldes, das einem Code des Landes, in dem sich das Endgerät befindet, entspricht, erhalten wird (E40).

7. Auswahlverfahren nach einem der Ansprüche 1 bis 5, **dadurch gekennzeichnet, dass** die Information durch Lesen eines Feldes, das den Betreiber des Telekommunikationsnetzes, in dessen Versorgung sich das Endgerät befindet, identifiziert, erhalten wird (E40).

8. Auswahlverfahren nach einem der Ansprüche 2 bis 7, **dadurch gekennzeichnet, dass** der Schritt (E40) des Erhaltens einer Lokalisierungsinformation bei Empfang (E32) einer durch das gesicherte Modul gesendeten Meldenachricht (REFR), die für eine Aktualisierung des Speichers (MEM) repräsentativ ist, durchgeführt wird.

9. Auswahlverfahren nach Anspruch 8, **dadurch gekennzeichnet, dass** die Meldenachricht der Befehl STK REFRESH ist.

10. Auswahlverfahren nach einem der Ansprüche 1 bis 9, **dadurch gekennzeichnet, dass** die Anwendung (AP1) eine modulare Anwendung ist, von der:
- wenigstens ein Modul (MS1) durch einen Mikrocontroller (101) des gesicherten Moduls ausführbar ist, und
- wenigstens ein Modul (IHM1) durch einen Mikrocontroller (11) des Endgerätes, der sich außerhalb des gesicherten Moduls befindet, ausführbar ist.

11. Endgerät (TRM), umfassend:
- ein Modul (MSEL) zum Erhalten einer Lokalisierungsinformation des Endgerätes mittels eines Speichers (MEM) eines in das Endgerät integrierten gesicherten Moduls (MSEC), und
- ein Modul (MSEL) zur Auswahl einer Anwendung (AP1, AP2), die wenigstens teilweise durch das gesicherte Modul ausführbar ist, wobei die Auswahl anhand dieser Lokalisierungsinformation erfolgt.

12. Endgerät (TRM) nach Anspruch 11, wobei das Endgerät ein Mobilkommunikationsendgerät ist, das ein Modul zur Kommunikation über ein Mobiltelekommunikationsnetz umfasst, wobei dieses Endgerät **dadurch gekennzeichnet ist, dass**:
- das gesicherte Modul (MSEC) ein Modul zur Authentifizierung des Endgerätes über das Netz ist,
- das Kommunikationsmodul (MACQ) Mittel umfasst, um die Lokalisierungsinformation zu erfassen und um die Information in dem gesicherten Modul zu speichern, und dass
- das Auswahlmodul (MSEL) eine Anwendung PPSE gemäß der EMV-Norm ist.

13. Computerprogramm (PG1), umfassend Befehle für die Durchführung des Auswahlverfahrens nach einem der Ansprüche 1 oder 5 bis 9, wenn dieses Programm durch einen Prozessor (101) ausgeführt wird.

14. Durch einen Computer lesbarer Speicherträger (103), auf dem ein Computerprogramm (PG1), das Befehle für die Ausführung der Schritte des Auswahlverfahrens nach einem der Ansprüche 1 oder 5 bis 9 umfasst, gespeichert ist.

15. Gesichertes Modul (MSEC), das einen Mikroschaltkreis und einen Träger nach Anspruch 14 umfasst.

## Claims

1. A process which can be executed by a terminal (TRM) for selecting an application (AP1, AP2) executable at least in part by a secure module incorporated into that terminal, this process being as comprising:
- a step (E40) for obtaining location information of the terminal from a memory (MEM) of said secure module (MSEC); and
- a selection step (E50) of an application from this location information.

2. The selection process as claimed in Claim 1, **characterised in that** it comprises an acquisition step (E10) of said location information by an acquisition module (MACQ) of the terminal, external to said secure module and a storage step (E20) of said information in said secure module.

3. The selection process as claimed in Claim 2, **characterised in that** said terminal (TRM) is a cell phone and **in that** said location information is acquired (E10) by said acquisition module (MACQ) during a search step for a telecommunications network the coverage zone of which covers said terminal.

4. The selection process as claimed in Claim 3, **characterised in that** said location information is acquired (E10) on startup of the terminal, or in a nomadism situation during roaming from a first coverage zone covered by a first telecommunications network to a second coverage zone covered by a second telecommunications network.

5. The selection process as claimed in Claim 3 or 4, **characterised in that** said information is obtained (E40) by reading a TMSI or LAI field of a localisation file EF_{LOCI} conforming to fourth-generation cellular telephony standard, for example the LTE standard.

6. The selection process as claimed in any one of Claims 1 to 4, **characterised in that** said information is obtained (E40) by reading a field corresponding to a code of the country in which said terminal is located.

7. The selection process as claimed in any one of Claims 1 to 5, **characterised in that** said information is obtained (E40) by reading a field which identifies the operator of the telecommunications network in the coverage of which is said terminal.

8. The selection process as claimed in any one of Claims 2 to 7, **characterised in that** said step (E40) for obtaining location information is executed on receipt (E32) of a signalling message (REFR) sent by said secure module, representative of updating of said memory (MEM).

9. The selection process as claimed in Claim 8, **characterised in that** said signalling message is the STK REFRESH command.

10. The selection process as claimed in any one of Claims 1 to 9, **characterised in that** said application (AP1) is a modular application whereof:
- at least one module (MS1) is executable by a microcontroller (101) of said secure module; and
- at least one module (IHM1) is executable by a microcontroller (11) of said terminal, external to said secure module.

11. A terminal (TRM) comprising:
- a module (MSEL) for obtaining location information of the terminal from a memory (MEM) of a secure module (MSEC) incorporated in the terminal; and
- a selection module (MSEL) of an application (AP1, AP2) executable at least in part by said secure module, the selection being made from this location information.

12. The terminal (TRM) as claimed in Claim 11, the terminal being a cellular communications terminal comprising a communications module on a cellular telecommunications network, this terminal being **characterised in that**:
- said secure module (MSEC) is an authentication module of the terminal on said network;
- said communications module (MACQ) comprises means for acquiring said location information and for storing said information in said secure module; and **in that**
- said selection module (MSEL) is a PPSE application conforming to EMV standard.

13. A computer program (PG1) comprising instructions for executing the selection process as claimed in any one of Claims 1 or 5 to 9 when this program is executed by a processor (101).

14. A recording medium (103) readable by a computer on which is recorded a computer program (PG1) comprising instructions for execution of the steps of the selection process, as claimed in any one of Claims 1 or 5 to 9.

15. A secure module (MSEC) comprising a microcircuit and a medium, as claimed in Claim 14.
